# EUROPEAN PATENT APPLICATION

(11) **EP 4 213 025 A1**
(43) Date of publication of application: **19.07.2023**
(21) Application number: 22200592.8
(22) Date of filing: 10.10.2022
(51) Int. Cl.: G06F 11/14, G06F 16/11, G06F 11/20, G06F 21/50

(54) **METHOD AND SYSTEM FOR STORING AND PROTECTING DATA**

(30) Priority: 12.10.2021 NL 2029386
(71) Applicant: Bluetron B.V., 3905 NL Veenendaal (NL)
(72) Inventor: DROPPERT, Anthony, 3905 NL Veenendaal (NL); BANKEN, Gerardus, Petrus, Henricus, Johannes, 3905 NL Veenendaal (NL)
(74) Representative: Patentwerk B.V.

(57) **Abstract**

Method for storing and protecting data for long term data retention comprising the steps of providing digital data in any format, and the step of storing the digital data in open format; and the step of data washing of data before and/or during storage. The step of storing the data comprises providing at least two data carriers, wherein each data carrier comprises a copy of the same data to be stored and at least one of them is stored offline. The invention further relates to a system for storage and protection of data using the method of the present invention.

## Description

The invention relates to a method for storing and protecting data. The invention further relates to a system for storage and protection of data using the method of the present invention.

Every day a company in the Netherlands is confronted with non-functioning of their critical operational systems due to ransomware. A third party blocks the access to all data of a company. Only after payment of a lumpsum the systems and data of the company will be accessible for the company again. Hacking activities are increasing and constantly changing while electronical data is essential to the operation of companies and other type of organisations like non-profit organisations, schools, hospitals and so on. Also, the protection of privacy sensitive data is increasingly important. It is a nightmare for companies that their computer systems could be shut down due to ransomware, viruses or other hacking activities. Often, also the backup data is affected by an attack with ransomware. Some companies face no other option than to pay and get back in business. Such blackmail activities by using ransomware are becoming bigger and with more impact.

Besides ransomware, various other threats to systems and data of company are part of daily life. For example, upon release of new antivirus definitions, companies need to run the new anti-virus scans to keep their data and company safe from new viruses. However, these new antivirus definitions may also shut down company vital applications, so it is common that IT departments first check what happens to the applications used by the company when new antivirus definitions are released. Such process may take several months, while during this period a company or organisation may be vulnerable to the new virus.

A known solution to protect a companies' data is to make a back-up of the data and systems. The so called "3-2-1 rule" for backups is a known concept, wherein it is advised that data should be stored at three locations - of at least one should be off-site - and at at least two different type of data carriers. For such off-site location a cloud-solution with off-site servers is often used. This solution protects the data on the off-site location from for instance the risk of data loss upon the occurrence of flooding of the original site, but the off-site server remains vulnerable to online attacks.

It is a goal of the present invention to provide an improved way of storing data. It is a second goal of the present invention to reduce vulnerability of data storage making the stored data, among others, less vulnerable for malicious attacks.

The invention thereto provides a method for storing and protecting (quality assurance) data for long term data retention comprising the steps of:
providing digital data in any format; and storing the digital data in open format; and
data washing of data before and/or during storage; wherein the step of storing the data comprises providing at least two data carriers wherein each data carrier comprises a copy of the same data to be stored and at least one of them is stored offline. Preferably this offline data carrier, while stored, does not have the option or possibility to make an online connection to another medium. Only for the purpose of downloading the data carrier may be connected to an online connection.

The main advantage of the method according to the present invention is that it provides a method to guarantee that data can be retrieved after a long term of data storage, among others due to the combination of open format storage and offline storage. Long term storage may be several years up to storage of about 30 to 50 years. The data may be provided in any format and then converted to open format. Preferably raw data is read during providing the digital data and consequently stored in an open format. In this case open format means that any format can be used for storage and as such no conversion is needed. The use of storage in open format is advantageous because this enables the user to be independent of software systems for retrieval and use of the stored data. This means that if the user switched from hardware or software within their operations over time, the data that is stored according to the method of the present invention can still be used.

The data is subjected to data washing, either after providing of the data and/or during storage. The data washing checks for example whether the data is healthy and/or infected and/or corrupted and/or polluted, in other words if the data is ready for storage for long term data retention. The step of data washing is preferably kept up to date with the latest checks and may include scans with latest virus definitions, ransomware check, readability check, malware check. The step of data washing after the data is provided, before storage, has the advantage that possible pollutions in the data are detected and taken out from the data, such that substantially healthy and clean data is stored. Data washing may also be used once the data is stored, because some pollutions or ransomware seeds may be present in the data but not be detectable upon providing the data and thus may still be present in the data. Over time, the possibilities to detect these (inactive) ransomware seeds and (inactive) pollutions increase and thus it becomes possible to detect these later on. The step of data washing during storage is advantageous because it can search for any threats to the data, without considering constraints of other operational programs of the company where the data belongs to. This way the data washing may have a quick response time and thus reducing the time wherein the data of a company is vulnerable.

Where in this document the term polluted data or pollutions with reference to data is used, also infected data, contaminated data, corrupted data, or likewise terms are meant.

The present invention uses offline data carriers, preferably tapes, for data storage, because the use of offline data carriers such as tapes has several advantages over storage in the cloud. Data storage on offline data carriers are less vulnerable to hacking activities since hackers usually use online means to get to the data. In the offline storage, there is no online door and thus it is not possible to get to the data on the offline data carrier by using online means.

An example of offline storage carriers is hard disks or USB-stick as a data carrier. To keep the data on these data carriers readable, the data carriers must be coupled to a power source every now and then, for example once a year. Data storage on tapes can keep data readable without the need for a coupling to a power source. Thus, the use of tapes is advantageous over the use of conventional data carriers, such as hard disks, since the tapes may store data while keeping the data in good condition for over 30 years. Therefore, the present invention preferably uses tapes (LTO) as data carriers. The use of tapes has more advantages. One of them is that even when an LTO tape is physically damaged, such as holes in the tape, then the data can still be retrieved. Another advantage is that tape storage uses less energy than online storage for the same amount of data, approximated 60% less energy is needed for the same amount of storage by using tapes versus online cloud storage. This energy saving is beneficial due to the lower cost and lower environmental footprint. Furthermore, tape storage is particularly suitable for storage of data in open format and the stored data is therefore not depending on or linked to the use of specific hardware and/or software.

The present invention is in particular advantageous for storing privacy sensitive data, such as medical or financial records and process data for operations for the industry. These data are characterised in that the data is essential for the user, for example due to legislation or due to their business value, but the user does not need to access or change these data daily. Therefor it is beneficial to store these data in a safe place where it is accessible upon request.

In a preferred embodiment of the method according to the present invention, data washing comprises the step of subjecting data to a scan for pollution and/or decline, for example checking on usability, ransomware, viruses and/or malware and subsequently eliminating the detected data pollution and/or decline. Eliminating the detected data pollution and/or decline may comprise putting the detected data in quarantine before deciding whether or not the data should be removed, deleted, or whether the data can be healed or restored.

In an embodiment of the method according to the present invention, the step of initial storage of the data is preceded by data washing of provided data and wherein any polluted data is put in quarantine and/or is removed before storage. The data washing decreases the chances that polluted data is stored.

In an embodiment of the method according to the present invention, the data washing of stored data is triggered by awareness of new pollutions, threats and/or detection tools and/or a defined elapsed time frame. The data washing may comprise a periodic recovery scan, for checking if the data is still recoverable from the data carrier, such as a tape. Preferably, the response time after awareness is short, preferably at least within ten days after the awareness of new pollutions like for instance a new virus definition, preferably within one week after the availability of a new virus definition, more preferably within three days after the availability of a new virus definition. It is advantageous to have a short response time, because during the response time the data is vulnerable to new threats, such as viruses. The advantage of the method according to the present invention is that the response time may be short. In most companies the response time is typically three months, because first the functioning of other operational software must be tested while running the new threat protecting measures to prevent that critical operational software does not function properly anymore. During these typical three months, the company is in a vulnerable position. The method according to the present invention facilitates a short response time, thus protecting the provided data through storing and data washing.

Backup data are data which are overwritten each time a backup is made and are thus a snapshot of the data of the latest backup moment. Archive data are data which are kept for a longer period, for the purpose of archiving only. The present invention aims at storing data for a longer period with the purpose of retrieving (or removing) the data upon request and provides a solution for data retrieval guarantee. In this document the term stored data is used for data stored according to the method of the present invention. The stored data may be used as a backup or as an archive. In known backup solutions periodically, for example each 90 days, the old backup is overwritten by the new backup data. Consequently, the previous version of the backup cannot be retrieved anymore. In case the backup data are contaminated by ransomware which is asleep for a longer period than 90 days and only pollutes the data later on, there is no clean back up anymore. The backed-up data cannot be used to restore the operations.

In a preferred embodiment, stored data is preserved, and washed data is additionally stored. Since ransomware or the like can be silent and/or non-active for a longer period, it is advantageous to store incrementally and to not overwrite any data. This prevents that a clean version of data is overwritten by a version including non-active seeds of for example ransomware. For this embodiment it is possible that the step of providing data comprises receiving incremental data. This means that instead of storing all data again as a new version, only the required additional data is stored, which reduces the amount of data stored, and thus reduces energy, material and space needed for storage. It is also possible that over time each time an entire new set of data is stored, while keeping the older version as well.

This means that in this preferred embodiment of the method according to the present invention, it is further possible that depending on the outcome of data washing of received (incremental) data and/or stored data an older version of the data will be restored. This is advantageous when a file or (group of) data is crucial and is preferably not deleted. Instead of removing the polluted data and losing the data, the file or group of data is identified and the data washing step can identify in which version said file or group of data is clean. Subsequently the clean file or group of data may be restored and/or downloaded and/or be provided to the user.

In an embodiment of a method according to the present invention, storing the data in open format comprises providing at least two data carriers, preferably at least three, even more preferably three data carriers, which data carriers are configured for storing data in an open format and copying the received data to a first data carrier, preferably a first tape, and storing a first copy of data on the first data carrier at a first location and copying the received data to a second data carrier, preferably a second tape, and storing the second copy of data on a second offline tape at a second central server, at a second location and wherein of the first and second data carrier at least one of them, preferably both, are stored offline. The offline storages means without an online connection to another medium. The data carrier may be connected to an online connection for data transfer, afterwards the copy of the data is stored offline. This is to prevent that a third party can access the stored data through said online connection. If data retrieval from the data carrier is desired, the data carrier may be carried physically to a downloading server, where the data carrier may be temporarily connected to (subjected to) an online connection for the purpose of downloading data on the data carrier. To use more than three data carriers is possible, this increases the data guarantee.

Preferably this embodiment further comprises copying the received data to a third data carrier, preferably a third tape, and storing the third copy of data on a third offline data carrier, preferably a third tape, in a third location, which third location is preferably an underground shelter and preferably geographically situated at distance from the first and second location. The third copy on a third data carrier, preferably third tape, is preferably stored offline. An underground shelter is an additional barrier to protect the stored data. Since the underground shelter is hard to physically enter, making it difficult to reach the stored data carriers, the underground shelter may be especially beneficial in the case of a natural disaster, war, severe weather or a physical attempt to sabotage the storage facility.

In an embodiment of the method according to the present invention, the step of receiving data comprises temporarily storing the received data on a hard disk or hard drive to perform step of data washing of the received data and wherein said hard disk or hard drive is fully emptied after storing the data, preferably on an offline data carrier, including deletion of metadata of the received data. This is advantageous because if hackers do enter the environment of the hard disk, there is no evidence of information left of the data which was present in the past.

It is conceivable that in an embodiment a first copy of the received data is made in a first service centre and a second and third copy are made in a second service centre, and wherein the second service centre receives the data through a secured online connection. Preferably the first service centre and second service centre are not in the same location. The first and second service centre may easily be geographically separated from each other, for example about 30 kms. This embodiment has the advantage that the copy making facilities are physically not in the same location, which spreads the risk of any power outages, natural disasters or any other threats to the operation. The data transmission between the service centres is preferably done through the use of a secured SSH transmission or the like. After the data is received and a copy is made to a data carrier, the received data and metadata may be deleted, such that a third party cannot find a trace of which data was processed in the service centre.

In an embodiment of the method according to the present invention, archive key protocols may be used for protecting the data on the data carriers. Archive key protocols are beneficial because they are commonly available and easy to implement to protect the data.

In an embodiment of the method according to the present invention each data carrier comprises data from one data provider. This is advantageous because it avoids contamination between data from different data providers.

In an embodiment of the method according to the present invention, metadata may be used by a server for identifying the stored data on a data carrier, such as tapes. To retrieve the data from the data carriers the method may use transporting the data carriers to a download server, which is configured for making the data available such that a third party can access the data on the tape and download said data. The transport preferably takes place offline, such as transport of the physical data carrier by a person from the storage to the download server, so that during the transport the data remains offline.

It is beneficial for the user friendliness when the method comprises the step of reviewing metadata through a web portal for identifying stored data. By using the metadata, it is possible to quickly identify a file and identify the corresponding data carrier where said file is stored. This may be used for data retrieval and/or data removal.

In an embodiment of the method according to the present invention, the method comprises the step of proactively searching for possible ransomware and/or virus threats by performing Al shield. The Al shield may proactively search for possible threats or new virus definitions, such that the data washing process may be improved. The sooner awareness is raised about new virus threats or ransomware or the like, the sooner the data washing may be updated according to this new information to scan the stored and/or provided data and find possible threats in the data.

In an embodiment, the data, in particular non-encrypted data and encrypted data, can be supplied by a single data provider and in this embodiment the method comprises the step of using the outcome of the data washing of the (non-encrypted) data as a trigger for detecting threats in encrypted data of the same data provider. In this embodiment a single data provider can be seen as a data provider wherein the non-encrypted data and encrypted data was accessible from the same data storage, such as a server.

Some companies have sensitive data, which is sensitive due to their privacy sensitive nature or due to the company secrets it holds. For this purpose it is possible to use the method according to the present invention. However, the data is then can possibly be transferred online to the server which is a short but still vulnerable step. In an embodiment according to the present invention, there is an additional route for storing sensitive data. In said embodiment sensitive data is encrypted. This embodiment is also possible for other encrypted data. If applied, from one data provider encrypted and non-encrypted data should be provided. The non-encrypted data can be washed according to the method of the present invention and the encrypted data is not washed. The outcome of the data wash of the non-encrypted data can be a trigger that the same threats are present in the encrypted data from the same data provider.. If the outcome of the data wash of non-encrypted data is that the data is clean then it is likely to assume that the encrypted data is also clean. If the outcome of the data wash of the non-encrypted data is that the data is dirty (virus, malware or the like) then it is likely to assume that the encrypted data is also dirty in the same way as the non-encrypted data. Preferably, the encrypted data is only released when a data wash for the corresponding non-encrypted data was successful

The encrypted data is stored on offline data carriers and as such less vulnerable to hacking activities compared to online storage.

The present invention further relates to a system for storage and protection of data using the method according to any of the previous claims, comprising: at least a first server for receiving digital data; and at least one first library for storing a first copy of the data on a first data carrier; and at least a second server for receiving a dataset from the first server and copying data to data carriers; at least one second library, for storing an offline second copy of the data to a second data carrier; wherein the first server is configured for making a first copy, and the second server is configured for making the second and preferably a third copy of said data.

The system facilitates to use the method and therefore has the same advantages as the method according to the present invention as described in this document.

The second server may comprise a deep archive central server, configured for storing at least one second data carrier, in particular multiple second data carriers.

It is advantageous when the system comprises an underground storage unit, for accommodating at least one library wherein data carriers are stored. The underground storage unit is an additional physical protective barrier to protect the data carriers from any outside threats, such as natural disasters as floodings.

Preferably, each data carrier is an LTO tape (Linear Tape-Open).
Preferably the data carrier is a tape, and each tape is configured for storing data up to 20 years, preferably up to 30 years, even more preferably up to 50 years.

The present invention will be further elucidated on the basis of the non-limitative exemplary embodiments shown in the following figures. Herein shows:
fig. 1 a schematic view of an embodiment of the method according to the invention; and
fig. 2 a schematic view of an embodiment of a system according to the invention; and
fig. 3 a schematic view of an embodiment of a method according to the present invention for storing and washing sensitive data.

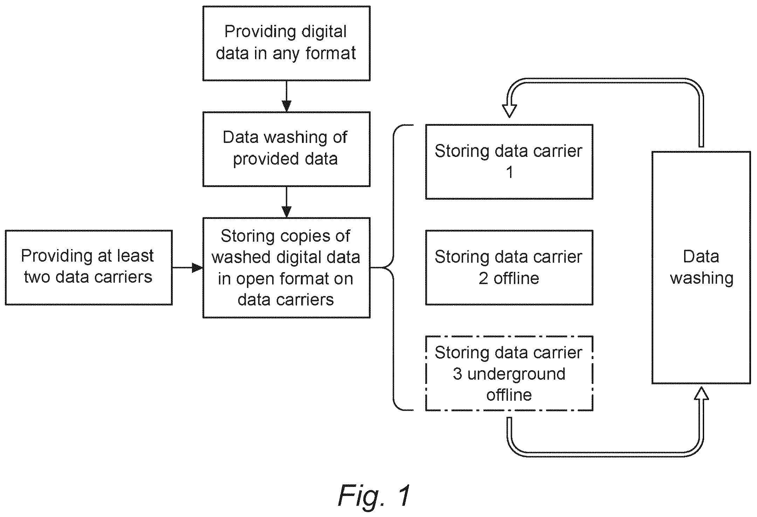

Figure 1 shows a schematic view of an embodiment of a method according to the present invention. The blocks show a step in the method, wherein the dashed lines show an optional step. The figure shows that two inputs are needed for the method. First providing digital data in any format and second providing at least two data carriers. The provided digital data is washed by the data washing, wherein for example checks are performed to check the health of the data in terms of any pollutions, viruses, ransomware or readability issues. The washed data is copied to data carriers and subsequently stored. The step of storing of the copies is split into storing in different locations, a first copy on a first data carrier is stored in a first location. A second copy on a second data carrier is stored in a second location. An optional third copy on a third data carrier is stored in a third location. These locations are preferably all offline, but in this example locations two and three represent offline storages. Once stored, the data is protected due to the fact that the storage is offline, so that there is no online access to the data possible. Besides this, the data is checked later as well by the data washing process once improved data washing can be performed, for example due to the awareness of new virus definitions. The arrows indicate that the process of data washing is repeated, which may be repeated periodically or upon awareness of new threats to the data.

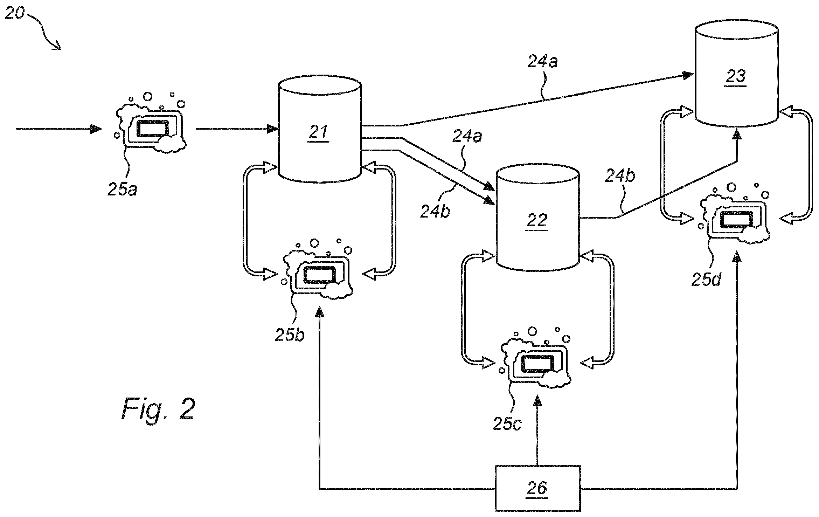

Figure 2 schematically shows a representation of a system according to the present invention. The system 20 comprises three libraries 21,22,23 for storing data carriers for storing second copies of data on a second data carrier in the second library 22 and . The arrows 24a show the transport path of an embodiment wherein the second and third copy are made in the same location as the first library and then transported individually to their respective storage locations 22, 23 The soap bar images represent a subsystem for data washing. Wherein the subsystem 25a is arranged for data washing provided data, preferably between receiving and storing of said data. Subsystems 25b,25c and 25d are arranged to respectively data wash the stored data in the respective library 21,22,23. The control mechanism 26 is arranged for triggering the data washing subsystems 25b,25c,25d.

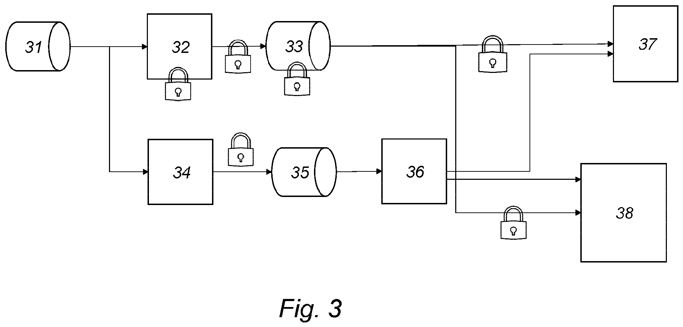

Figure 3 shows a part of an embodiment of the method according to the present invention. In the shown embodiment, a database 31 of a data provider is used wherein sensitive and non-sensitive data is stored. The sensitive data is encrypted and then moved 32 to a temporary separate storage for receiving the data 33, preferably a first server. The non-sensitive data that is provided by the data provider from the database 31, is moved to a temporary separate storage for receiving the data, preferably a first server 35. The same first server can be used for receiving non-encrypted and encrypted data. The non-encrypted data is subjected to a data wash 36. The non-encrypted data and the encrypted data is stored on a first offline data carrier in a first library 37. Also, the non-encrypted data and the encrypted data are stored on a second offline data carrier in a second library 38. The encrypted and non-encrypted data may be stored on the same offline data carrier or on separate data carriers.

For the non-encrypted data the method for storing and protecting data for long term data retention according to the present invention is followed comprising the steps of:
- providing digital data 34 in any format from a database 31; and
- storing the digital data in open format; and
- data washing of data before and/or during storage;
wherein the step of storing the data comprises providing at least two data carriers wherein each data carrier comprises a copy of the same data to be stored and at least one of them is stored offline.

For the encrypted data the route from database to storage in a first or second library is protected, which is visually indicated by a keylock.

In the shown embodiment, the data, in particular non-encrypted data and encrypted data, can be supplied by a single data provider and in this embodiment the method comprises the step of using the outcome of the data washing of the (non-encrypted) data as a trigger for detecting threats in encrypted data of the same data provider. If during step of data washing 36 of the non-encrypted data a threat is found, the encrypted data is assumed to be infected with the same threat (virus, ransomware, malware or the like). Consequently, the same treatment that is chosen for the non-encrypted data can be applied to the encrypted data.

## Claims

1. Method for storing and protecting data for long term data retention comprising the steps of:
- providing digital data in any format; and
- storing the digital data in open format on offline data carriers, preferably tapes; and
- data washing of data before and/or during storage;
wherein the step of storing the data comprises providing at least two data carriers wherein each data carrier comprises a copy of the same data to be stored and at least one of them is stored offline.

2. Method according to claim 1, wherein data washing comprises subjecting data to a scan with pollution and/or decline, for example checking on usability, ransomware, viruses and/or malware and subsequently eliminating the detected data pollution and/or decline.

3. Method according to claim 1 or 2, wherein the step of initial storage of the data is preceded by data washing of provided data, and wherein any polluted data is put in quarantine and/or is removed.

4. Method according to any of the previous claims, wherein data washing of stored data is triggered by awareness of new pollutions, threats and/or detection tools and/or a defined elapsed time frame.

5. Method according to any of the previous claims, wherein stored data is preserved, and washed data is additionally stored, preferably wherein the step of providing data comprises providing and/or receiving incremental data, and, wherein depending on the outcome of data washing of received (incremental) data and/or stored data an older version of the data will be restored.

6. Method according to any of the previous claims, wherein storing the data in open format comprises:
- providing at least two data carriers, preferably at least three, which data carriers are configured for storing data in an open format;
- copying the received data to a first data carrier, preferably a first tape, and storing a first copy of data on the first data carrier at a first location;
- copying the received data to a second data carrier, preferably a second tape, and storing the second copy of data on a second offline tape at a second central server, at a second location;
and wherein of the first and second data carrier at least one of them is stored offline.
- optional copying the received data to a third data carrier, preferably a third tape, and storing the third copy of data on a third offline data carrier, preferably a third tape, in a third location, which third location is preferably an underground shelter and preferably geographically situated at distance from the first and second location.

7. Method according to any of the previous claims, wherein the step of receiving data comprises temporarily storing the received data on a hard disk or hard drive to perform step of data washing of the received data and wherein said hard disk or hard drive is fully emptied after storing the data, in particular on an offline data carrier, including deletion of metadata of the received data, preferably wherein a first copy of the received data is made in a first service centre and a second and third copy are made in a second service centre, and wherein the second service centre receives the data through a secured online connection.

8. Method according to any of the previous claims, wherein archive key protocols are used for protecting the data on the data carriers.

9. Method according to any of the previous claims, wherein each data carrier comprises data from one data provider, and/or wherein metadata is used by a server for identifying the stored data on a data carrier, such as tapes.

10. Method according to any of the previous claims, comprising the step of retrieving data from the data carriers, by transporting the data carriers to a download server, which is configured for making the data available such that a third party can access the data on the tape and download said data.

11. Method according to any of the previous claims, comprising the step of reviewing metadata through a web portal for identifying stored data, for example for identifying one file and corresponding data carrier where said file is stored.

12. Method according to any of the previous claims, comprising the step of proactively searching for possible ransomware and/or virus threats by performing Al shield.

13. Method according to any of the previous claims, wherein encrypted data and non-encrypted data is supplied by a single data provider and comprising the step of using the outcome of the data washing of the non-encrypted data as a trigger for detecting threats in encrypted data of the same data provider.

14. System for storage and protection of data using the method according to any of the previous claims, comprising:
- at least a first server for receiving digital data; and
- at least one subsystem for data washing; and
- at least one first library for storing a first copy of the data on a first data carrier; and
- at least a second server for receiving a dataset from the first server and copying data to data carriers;
- at least one second library, for storing an offline second copy of the data to a second data carrier;
wherein the first server is configured for making a first copy, and the second server is configured for making the second and preferably a third copy of said data.

15. System according to any of the claims 14, wherein each data carrier is a tape, preferably an LTO tape (Linear Tape Open), and each tape is configured for storing data up to 20 years, preferably up to 30 years, even more preferably up to 50 years.
